# EUROPEAN PATENT SPECIFICATION

(11) **EP 0 666 095 B1**
(45) Date of publication and mention of the grant of the patent: **03.05.2000**
(21) Application number: 94101755.0
(22) Date of filing: 05.02.1994
(51) Int. Cl.: B01D 39/16, B01J 20/28, D04H 1/54

(54) **Particulate filter structure**
Partikelfilterstruktur
Structure de filtre à particules

(43) Date of publication of application: 09.08.1995
(73) Proprietor: AQF Technologies LLC, Charlotte, NC 28273 (US)
(72) Inventor: Groeger, Herbert Gunter, Charlotte NC, 28210 (US)
(74) Representative: von Kreisler, Alek, Dipl.-Chem.

(56) References cited:
- EP-A- 0 156 649
- EP-A- 0 257 868
- WO-A-85/03013
- WO-A-93/01880
- WO-A-94/11556
- FR-A- 2 120 871
- US-A- 4 963 431
- US-A- 4 983 192

## Description

### Field of the Invention

This invention relates to dimensionally stable filter structures formed from thermoplastic fibers, and in particular to such filter structures having functional particulate matter incorporated therein.

### Background of the Invention

Filter structures formed from thermoplastic fibers and having a functional particulate matter incorporated therein may be used for a variety of purposes. Such filter structures containing activated carbon have been used to adsorb noxious or harmful gases. Other activated particulates may be used depending on the function of the filter. For example, a biocide may be incorporated into a thermoplastic filter structure for the destruction of microbes passing through the filter. The variety of particulate matter and the functions associated therewith are extensively documented and are too extensive to list individually herein.

Examples of activated carbon filters for gas masks are disclosed in U.S. Patent Nos. 4,981,501 and 4,992,084. These patents disclose a three dimensional carrier framework for activated carbon particles having a diameter from 0.1 to 1 mm. The carrier framework is said to be composed of wires, monofilaments or stays, the distance between the components being at least twice as great as the diameter of the adsorbent particles. A large pore reticulated polyurethane foam is specifically disclosed as a carrier framework for granular adsorbent particles. These patents also disclose that the adsorbent particles can be affixed to heterofilic fibers having two coaxially arranged components wherein one component has a lower melting point than the other. However, no method for preparing a dimensionally stable carrier framework from such heterofilic fibers is disclosed.

EP-A-0-257 868 describes a durable melt-blown sheet material comprised of a melt-blown fiber web with a plurality of reinforcing fibers extending therethrough. The reinforcing fibers may be bicomponent fibers. The denier of the reinforcing fibers is preferably less than 3. The melt-blown fibers are preferably microfibers averaging less than 10 micrometers in diameter. Solid particles such as activated carbon particles, can be dispersed in the melt-blown fiber web. The melt-blown fiber web, with or without solid particles, is formed, thereafter the reinforcing fiber is needled through the web, and thereafter heat is applied.

It would be desirable to provide a dimensionally stable filter structure from thermoplastic fibers and an active particulate matter in which the carrier framework for the structure also carries a fibrous filter material in addition to the particulate filter material. Such a filter structure could provide greater surface area for attachment of particulate matter.

### Summary of the Invention

This invention relates to a particulate filter structure according to claim 1, the particulate filter structure having a high degree of dimensional stability and including a stable framework of relatively larger denier composite fibers, thermoplastic fibers of relatively smaller denier dispersed throughout and bonded to the framework, and an active particulate matter bonded to at least the smaller denier thermoplastic fibers. The larger denier fibers maintain the stability and permeability of the filter structure, which filter structure substantially is formed of the smaller denier fibers and the particulate matter.

The invention furthermore relates to methods for preparing such a filter structure according to claims 8, 10 and 11.

The larger denier fibers particularly comprise about 10 percent or less of the total weight of the filter structure.

The larger denier fibers should have a denier of at least about 30 dpf (denier per filament) and should comprise a relatively higher melting component and a relatively lower melting component. The lower melting component bonds the fibers of the framework at the cross-over points. The smaller denier fibers should haven a denier of less than about 30 dpf and are dispersed throughout and bonded to the framework to immobilize the thermoplastic fibers and to provide a surface for attachment of active particulate matter. The active particulate matter is bonded to at least the smaller denier thermoplastic fibers.

In a more specific embodiment, the small and large denier fibers are formed of the same material and are sheath/core heterofilament fibers having a nylon sheath and a polyester core. A filter structure formed from such larger and smaller denier heterofilaments can be made having a thickness of from about 1.0 mm to 250 mm. The particulate matter can have a nominal particle diameter from 0.1 micrometer to 5 mm depending on the selection of the framework composite fibers and the smaller denier thermoplastic fibers.

The method for preparing such a particulate filter structure comprises preparing a framework of the relatively larger denier composite fibers having a denier of 30 dpf or greater, and thermally bonding these fibers at the cross-over points. Smaller denier thermoplastic fibers are dispersed into the framework and these fibers have a denier of less than about 30. The smaller denier fibers are immobilized onto the framework and a particulate matter is dispersed onto the framework and thermally bonded to at least the smaller denier fibers.

The smaller denier fibers can be dispersed into the framework by hydro-entanglement or air-entanglement or some other suitable method. Alternatively, a web of relatively small denier thermoplastic fibers can be formed and larger denier fibers can be integrated into the smaller denier web to provide dimensional stability.

In another specific method, a slurry of large and small denier fibers is placed into a mold and the solvent is removed to form a filter structure. Activated particulate matter may be included in the slurry or may be added after the filter structure is formed.

### Brief Description of the Drawings

Figure 1 is a representation of a cross-section through a filter structure of the present invention.
Figure 2 is a representation of a cross-section through a representative thermoplastic fiber of the present invention.
Figure 3 is a representation of a portion of the filter structure of Figure 1 showing bonding of the fibers in the filter structure and bonding the particulate matter to the fibers of the filter structure.

### Detailed Description of the Preferred Embodiments

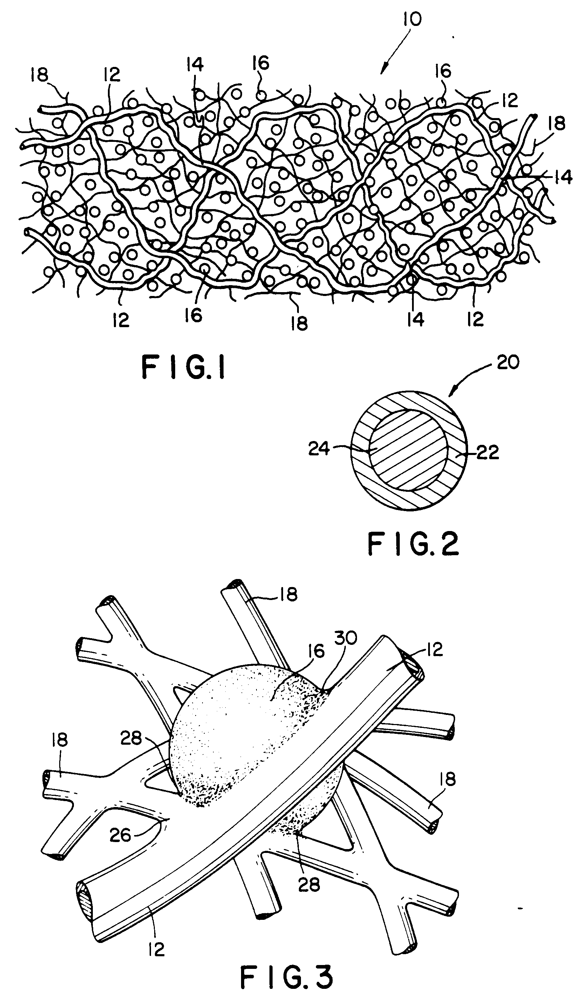

Figure 1 illustrates broadly at **10** a representation of a cross-section through a portion of the filter structure of the invention claimed herein. The filter structure includes a stable framework of relatively larger denier composite structural fibers **12** that are thermally bonded at the cross-over points **14**. By the term "structural fibers" is meant fibers of relatively larger denier that may be used to support a filter or fabric structure. These structural fibers have a denier of at least about 30 dpf.

The structural fibers may range in denier from about 30 dpf to 10,000 dpf or larger depending on the stiffness desired for providing a framework that is resistant to compression and is otherwise dimensionally stable and the size of the functional particulate **16** that is chosen. The composite fibers should be present in an amount sufficient to provide a structure to which may be bonded the relatively smaller denier fibers **18**.

The composite fibers **12** have a higher melting component and a lower melting component. The higher melting component has a melting point at least about 20°C higher than the relatively lower melting component. When heated above the melting point of the lower melting component, but below the melting point of the higher melting component, the lower melting component bonds the fibers of the framework together without affecting the structural integrity of the framework that is provided by the higher melting component.

Composite fibers suitable for use as structural fibers in the practice of the invention include bi-component fibers in which the higher and lower melting components are arranged in a side-by-side relationship, or heterofilament fibers having either a concentric or eccentric sheath/core arrangement with the high melting component forming the core and the lower melting component forming the sheath. The term "heterofilaments" as used herein refers to both staple fiber and to continuous filament, unless otherwise specified. The term "fiber" as used herein also refers to both cut staple and to continuous filament, unless otherwise specified. In side-by-side fibers the two components, one higher melting and one lower melting, are simultaneously extruded through single orifice to form a fiber having two halves. In the concentric sheath/core arrangement, a higher melting component forms a core centered axially within a lower melting sheath. In the eccentric sheath/core arrangement, the higher melting component is not centered axially of the fiber. Composite fibers are also sometimes referred to as bicomponent fibers.

Composite fibers having a lower melting nylon component and a higher melting polyester component have been found useful in the practice of the invention. For example, a sheath/core heterofilament (Figure 2) having a nylon sheath with a melting point from about 175-185°C and a polyester core with a melting point of from about 240-256°C has proven to be useful in the practice of the present invention.

Figure 2 is a representation of a cross-section through a heterofilament **20**. Heterofilament fiber **20** is representative of the many types of composite manufactured fibers that may be used for the framework or for attachment of the active particulate of the filter structure shown at **10** in Figure 1.

Fiber **20** is illustrated as a concentric sheath-core heterofilament fiber in which the sheath and the core each comprise about 50% of the cross-sectional area of the fiber. A range of area of the fiber occupied by the sheath is contemplated to be from about 20 to about 80%. The fiber has a lower melting nylon sheath **22** and a higher melting polyester core **24**. The sheath should have a melting point that is at least about 20°C below the melting point of the core and should occupy about half the cross-section of the fiber to provide strong thermal bonding of the fiber structure without adversely affecting the integrity of the core. The core provides strength and integrity to the filter structure.

The framework of relatively large denier structural fibers **12** of the filter structure of the invention all include composite manufactured fibers as described above, having a lower melting component for thermal bonding of the structure at cross over points **14** and for immobilizing relatively smaller denier fibers **18**. The skilled artisan should recognize that there are a wide variety of composite fibers having a higher melting component and a lower melting component that are suitable for the practice of the invention and that a heterofilament fiber having a nylon sheath and a polyester core is but one of the broad array of fibers available. The composite fibers **12** may also be in a wide variety of forms including crimped and non-crimped cut staple fibers, short cut staple, continuous filaments or blends thereof.

Smaller denier thermoplastic fibers **18** of the filter structure **10** are immobilized on the framework of larger denier fibers and provide, in addition to the particulate matter, active filtration of liquids and gases. These smaller denier fibers also greatly increase the surface available for immobilizing the functional particulates. These smaller denier fibers can range in denier from about 1 to 30 dpf. Smaller denier staple fibers and short cut staple are particularly useful in the filter structure of the invention, although continuous filaments are also contemplated. Fibers **18** should be present in an amount sufficient to immobilize the particulate matter and to provide a desired filtration at an acceptable pressure drop across the filter.

The smaller denier thermoplastic fibers can be immobilized in the framework of larger denier fibers through the application of heat. Care should be exercised to avoid fusing the smaller fibers into a mass that could adversely impact pressure drop across the filter or otherwise reduce filter efficiency. It has been found useful in the practice off the invention to use smaller denier fibers that have the same components as the composite structural fibers forming the framework.

For example, if sheath/core heterofilaments of nylon and polyester are used to form the framework, then it is useful for bonding the structure and for immobilizing the smaller diameter fibers and the particulate matter if the smaller denier fibers are also sheath/core heterofilaments of nylon and polyester having similar melting points. This similarity in melting points simplifies bonding of the filter framework, bonding of the smaller diameter fibers to the framework, and bonding of the particulate matter to the filter structure. Bonding and immobilization of the smaller denier fiber to the larger denier fiber, and fusing of the particulate matter to the larger and smaller denier fibers, is much the same as described herein above with respect to the bonding the larger denier composite fibers to form a framework.

Figure 3 is a greatly enlarged representation of particulate matter **16** immobilized within a framework of larger denier and smaller denier fibers **12** and **18**, respectively. The smaller denier fibers are immobilized on the framework of larger denier fibers at numerous points **26**. The particles are fused primarily to the smaller denier fibers at numerous points **28**, and may also be bonded to the larger denier fibers as shown at **30**. As can be seen from Figure 3, the filter structure is a cage-like structure in which particulate matter may be entrapped and substantially precluded from migrating. Fusing of the particle to the individual fibers desirably is localized in that the fiber does not form a film over the particle or otherwise substantially reduce the surface area of the particle available for contact with a liquid or gas stream moving through the filter structure.

The particulate matter may be selected from a wide variety of substances having some function that is desirably incorporated into a fibrous structure. One of the most common is activated carbon. Other types of functional particulate matter includes silica, zeolite, molecular sieve, clay, alumina, ion exchange resin, organic metal catalyst, metal oxide, biocide, fungicide, and virucide. For example, a fungicide particulate matter may be incorporated into a filter structure such as for an automobile climate control system to remove mildew and mildew odors from the circulated air. Biocides and virucides may be incorporated into filters for protection against microbial components. Particuiate sizes may range from a small size of 0.1 micrometer for biocides and fungicides to 3 to 5 mm for other types of particulate matter, and vary in shape from irregular to circular cylinders up to about 50 mm in length. The foregoing list is intended to be representative of the wide variety of functional particulate matter available and not in limitation of the substances suitable for use in the practice of the present invention.

The filter structures of the present invention may be produced by a variety of processes. For example, a slurry of the larger denier fibers and smaller denier fibers may be formed in a solvent of water, acetone or other suitable hydrocarbon and placed into a mold. Particulate matter may or may not be included in the slurry, as desired. The liquid component of the slurry is removed, typically by vacuum, and through-air heat may be applied to dry the filter structure. If particulate matter was present in the slurry, then heat may also be applied to bond the filter structure and to bond particulate matter to the fibers. Otherwise, the particulate matter is then distributed into the dried structure. Activated carbon beads can be heated prior to application so that localized bonding takes place on contact with the fibers of the filter structure. The fibers of the filter structure are thereafter bonded. Alternatively, the particulate matter may be distributed cold and the entire structure and particulate bonded in one step.

For example, activated carbon beads may be fused to individual concentric sheath/core fibers of the filter structure of the invention by heating the particles above the melting point of the low melting sheath component of the fiber and then dispersing the particles into the filter structure. Activated carbon can also be applied cold and then heated for immobilization within the filter structure. Activated carbon particles and other inorganic oxides and hydrates have significantly lower specific heats than polymers and so heat quickly and result in localized fluidity of the polymer. A "spot weld" is produced with a thin, controlled layer of adhesive provided by the polymer that minimizes loss of surface area of the particle.

The filter structure of the invention are formed by using dry forming methods such as carding or air laying of staple fibers or forming a web of continuous filaments. A web of the relatively larger denier fibers can be formed first and the smaller denier fibers and particulate matter dispersed therein and immobilized. Alternatively, a web of the relatively smaller denier fibers can be formed and the larger denier fibers thereafter integrated into the web. Particulate matter can be applied and immobilized either before or after the larger denier fibers are integrated into the web to form the filter structure of the web. Also, the web can be formed from the relatively smaller denier fibers and the relatively larger denier fibers together, and particulate matter can be applied and immobilized either during or after the formation of the web.

The particulate matter may be applied to the web from scatter coaters, engraved rolls, or screen conveyors. An inclined ramp may be used to spread the particulate matter and to enmesh the particulate matter within the web. Suitable methods for distributing particulate matter into a web are described in applicant's U.S. patent 5,674,339 (corresponding to WO-A-9 411 556) filed 18 November 1992.

The invention has been described with reference to particular preferred embodiments as illustrated in the drawing. However, these embodiments should be considered illustrative of and not in limitation of the invention claimed herein.

## Claims

1. A particulate filter structure having a high degree of dimensional stability and comprising
a) a thermally bonded, fibrous framework of composite structural fibers (12) of at least 30 dpf (denier per filament) and comprising a first relatively higher melting component and a first relatively lower melting component, the first relatively higher melting component having a melting point at least 20 °C higher than the first relatively lower melting component, the first relatively lower melting component bonding the structural fibers (12) together at the cross over points (14) of the structural fibers (12) to stabilize the fibrous framework;
b) composite thermoplastic fibers (18) of relatively smaller denier than the structural fibers (12), the composite thermoplastic fibers (18) being dispersed throughout and bonded to the fibrous framework by the application of heat so as to be immobilized, and comprising a second relatively higher melting component and a second relatively lower melting component, and being less than 30 dpf; and
c) active particles (16) bonded by the application of heat at least to the smaller denier, composite thermoplastic fibers (18).

2. The filter structure of claim 1, wherein the structural fibers (12) are crimped staple fibers and the composite thermoplastic fibers (18) are staple fibers, and/or the structural fibers (12) are from 30 to 10,000 dpf, and/or the composite thermoplastic fibers (18) are from 1 to less than 30 dpf.

3. The filter structure of claim 1 or 2, wherein the structural fibers (12) are sheath/core heterofilament fibers, the first higher melting component being a polyester, and the first lower melting component being a nylon that melts at a temperature of from about 175 to 185 °C.

4. The filter structure of any one of claims 1 to 3, wherein the composite thermoplastic fibers (18) are sheath/core heterofilament fibers, and/or the second higher melting component has a melting point at least 20 °C higher than the second lower melting component, and/or the higher melting component is a polyester, and the second lower melting component is a nylon that melts at a temperature of from about 175 to 185 °C.

5. The filter structure of any one of claims 1 to 4, wherein the active particles (16) are selected from the group consisting of activated carbon, silica, zeolite, molecular sieve, clay, alumina, ion exchange resin, organic metal catalyst, metal oxide, biocide, fungicide and virucide.

6. The filter structure of any one of claims 1 to 4, wherein the active particles (16) are activated carbon.

7. The filter structure of any one of claims 1 to 6, wherein the filter structure has a thickness from about 1.0 mm to 250 mm, and/or the structural fibers (12) comprise up to about 10 percent of the total weight of said filter structure.

8. A method for preparing a filter structure comprising
a) dry forming a fibrous framework of composite structural fibers (12) of a least 30 dpf (denier per filament) and comprising a first relatively higher melting component and a first relatively lower melting component, the first relatively higher melting component having a melting point at least 20 °C higher than the first lower melting component,
b) thermally bonding the structural fibers (12) at their cross over points (14) by the application of heat to stabilize the fibrous framework, wherein the first lower melting component bonds the structural fibers (12) together;
c) dispersing and immobilizing in the fibrous framework, composite thermoplastic fibers (18) of relatively smaller denier than the structural fibers (12) and comprising a second relatively higher melting component and a second relatively lower melting component, the smaller denier fibers (18) being less than 30 dpf, wherein heat is applied such that the smaller denier fibers (18) are bonded to the fibrous framework and immobilized; and
d) dispersing in the fibrous framework and thermally bonding by the application of heat at least to the smaller denier fibers (18), active particles (16).

9. The method of claim 8, wherein the smaller denier fibers (18) are distributed in the fibrous framework by air entanglement or hydroentanglement, and/or the structural fibers (12) are crimped staple fibers and the smaller denier fibers (18) are staple fibers, and/or the structural fibers (12) are from 30 to 10,000 dpf, and/or the smaller denier fibers (18) are from 1 to less than 30 dpf, and/or the active particles (16) are activated carbon.

10. A method for preparing a filter structure comprising
a) dry forming a web of composite thermoplastic fibers (18) of from 1 to less than 30 dpf (denier per filament) and comprising a first relatively higher melting component and a first relatively lower melting component,
b) integrating in said web, composite structural fibers (12) of at least 30 dpf, and comprising a second relatively higher melting component and a second relatively lower melting component, the second relatively higher melting component having a melting point at least 20 °C higher than the second lower melting component, to form a fibrous framework of the composite structural fibers (12),
c) applying heat to thermally bond the structural fibers (12) at their cross over points (14) to stabilize the fibrous framework and to bond the smaller denier thermoplastic fibers (18) to the structural fibers (12), thereby immobilizing the smaller denier thermoplastic fibers (18) within the fibrous framework, and
d) dispersing in the fibrous framework and immobilizing by thermally bonding by the application of heat at least to the smaller denier thermoplastic fibers (18), active particles (16).

11. A method for preparing a filter structure comprising
a) preparing a slurry comprising composite structural fibers (12) of at least 30 dpf (denier per filament) composite thermoplastic fibers (18) of relatively smaller denier than the structural fibers, and active particles in a liquid, wherein the structural fibers (12) comprise a first relatively higher melting component and a first relatively lower melting component, and the first relatively higher melting component has a melting point at least 20 °C higher than the first lower melting component, and wherein the composite thermoplastic fibers (18) comprise a second relatively higher melting component and a second relatively lower melting component, and are less than 30 dpf,
b) placing the slurry into a mold and removing the liquid, and
c) applying heat to bond the entire structure including the smaller denier fibers (18) to the structural fibers and the active particles (16) at least to the smaller denier fibers (18).

## Patentansprüche

1. Teilchenhaltige Filterstruktur mit einem hohen Grad an Formbeständigkeit, umfassend:
a) ein thermisch gebondetes Fasergerüst aus Verbundstoff-Strukturfasern (12) von wenigstens 30 dpf (denier pro Filament), die eine erste relativ höher schmelzende Komponente und eine erste relativ niedriger schmelzende Komponente umfassen, wobei die erste relativ höher schmelzende Komponente einen um wenigstens 20 °C höheren Schmelzpunkt hat als die erste relativ niedriger schmelzende Komponente, wobei die erste relativ niedriger schmelzende Komponente die Strukturfasern (12) an den Überkreuzungspunkten (14) der Strukturfasern (12) miteinander verbindet, so daß das Fasergerüst stabilisiert wird;
b) thermoplastische Verbundstoffasern (18) mit relativ kleinerem denier-Wert als die Strukturfasern (12), wobei die thermoplastischen Verbundstoffasern (18) innerhalb des gesamten Fasergerüsts verteilt und durch Einwirkung von Wärme mit dem Fasergerüst verbunden (gebondet) sind, so daß sie immobilisiert sind, und eine zweite relativ höher schmelzende Komponente und eine zweite relativ niedriger schmelzende Komponente umfassen und eine Feinheit von weniger als 30 dpf haben; und
c) aktive Teilchen (16), die durch Einwirkung von Wärme wenigstens mit den thermoplastischen Verbundstofffasern (18) mit dem kleineren denier-Wert verbunden sind.

2. Filterstruktur gemäß Anspruch 1, wobei die Strukturfasern (12) gekräuselte Stapelfasern sind und die thermoplastischen Verbundstoffasern (18) Stapelfasern sind und/oder die Strukturfasern (12) 30 bis 10 000 dpf aufweisen und/oder die thermoplastischen Verbundstoffasern (18) 1 bis weniger als 30 dpf aufweisen.

3. Filterstruktur gemäß Anspruch 1 oder 2, wobei die Strukturfasern (12) Kern/Hülle-Heterofilamentfasern sind, die erste höher schmelzende Komponente ein Polyester ist und die erste niedriger schmelzende Komponente ein Nylon ist, das bei einer Temperatur von etwa 175 bis 185 °C schmilzt.

4. Filterstruktur gemäß einem der Ansprüche 1 bis 3, wobei die thermoplastischen Verbundstoffasern (18) Kern/Hülle-Heterofilamentfasern sind und/oder die zweite höher schmelzende Komponente einen um wenigstens 20 °C höheren Schmelzpunkt hat als die zweite niedriger schmelzende Komponente und/oder die höher schmelzende Komponente ein Polyester ist und die zweite niedriger schmelzende Komponente ein Nylon ist, das bei einer Temperatur von etwa 175 bis 185 °C schmilzt.

5. Filterstruktur gemäß einem der Ansprüche 1 bis 4, wobei die aktiven Teilchen (16) aus der Gruppe ausgewählt sind, die aus Aktivkohle, Siliciumoxid, Zeolith, Molekularsieb, Ton, Aluminiumoxid, Ionenaustauscherharz, organischem Metallkatalysator, Metalloxid, Biozid, Fungizid und Viruzid besteht.

6. Filterstruktur gemäß einem der Ansprüche 1 bis 4, wobei es sich bei den aktiven Teilchen (16) um Aktivkohle handelt.

7. Filterstruktur gemäß einem der Ansprüche 1 bis 6, wobei die Filterstruktur eine Dicke von etwa 1,0 mm bis 250 mm hat und/oder die Strukturfasern (12) bis zu etwa 10% des Gesamtgewichts der Filterstruktur ausmachen.

8. Verfahren zur Herstellung einer Filterstruktur, umfassend
a) trockenes Bilden eines Fasergerüsts aus Verbundstoff-Strukturfasern (12) von wenigstens 30 dpf (denier pro Filament), die eine erste relativ höher schmelzende Komponente und eine erste relativ niedriger schmelzende Komponente umfassen, wobei die erste relativ höher schmelzende Komponente einen um wenigstens 20 °C höheren Schmelzpunkt hat als die erste relativ niedriger schmelzende Komponente;
b) thermisches Bonden der Strukturfasern (12) an den Überkreuzungspunkten (14) durch Einwirkung von Wärme, so daß das Fasergerüst stabilisiert wird, wobei die erste niedriger schmelzende Komponente die Strukturfasern (12) miteinander verbindet;
c) Verteilen und Immobilisieren von thermoplastischen Verbundstoffasern (18), die einen kleineren denier-Wert als die Strukturfasern (12) aufweisen und eine zweite relativ höher schmelzende Komponente und eine zweite relativ niedriger schmelzende Komponente umfassen, im Fasergerüst, wobei die Fasern (18) mit dem kleineren denier-Wert eine Feinheit von weniger als 30 dpf haben, wobei Wärme zugeführt wird, so daß die Fasern (18) mit dem kleineren denier-Wert mit dem Fasergerüst verbunden und immobilisiert werden; und
d) Verteilen von aktiven Teilchen (16) im Fasergerüst und thermisches Bonden derselben durch Einwirkung von Wärme an wenigstens die Fasern (18) mit dem kleineren denier-Wert.

9. Verfahren gemäß Anspruch 8, wobei die Fasern (18) mit dem kleineren denier-Wert durch Luftverwirrung oder Hydroverwirrung im Fasergerüst verteilt werden und/oder die Strukturfasern (12) gekräuselte Stapelfasern sind und die Fasern (18) mit dem kleineren denier-Wert Stapelfasern sind und/oder die Strukturfasern (12) 30 bis 10 000 dpf aufweisen und/oder die Fasern (18) mit dem kleineren denier-Wert 1 bis weniger als 30 dpf aufweisen und/oder es sich bei den aktiven Teilchen (16) um Aktivkohle handelt.

10. Verfahren zur Herstellung einer Filterstruktur, umfassend
a) trockenes Bilden eines Vlieses aus thermoplastischen Verbundstoffasern (18) mit 1 bis weniger als 30 dpf (denier pro Filament), die eine erste relativ höher schmelzende Komponente und eine erste relativ niedriger schmelzende Komponente umfassen;
b) Integrieren von Verbundstoff-Strukturfasern (12) von wenigstens 30 dpf, die eine zweite relativ höher schmelzende Komponente und eine zweite relativ niedriger schmelzende Komponente umfassen, in das Vlies, wobei die zweite relativ höher schmelzende Komponente einen um wenigstens 20 °C höheren Schmelzpunkt hat als die zweite niedriger schmelzende Komponente, wobei ein Fasergerüst aus den Verbundstoff-Strukturfasern (12) entsteht;
c) Zuführen von Wärme, so daß die Strukturfasern (12) an ihren Überkreuzungspunkten (14) thermisch gebondet werden, so daß das Fasergerüst stabilisiert wird, und die thermoplastischen Fasern (18) mit dem kleineren denier-Wert an die Strukturfasern (12) gebondet werden, wodurch die thermoplastischen Fasern (18) mit dem kleineren denier-Wert innerhalb des Fasergerüsts immobilisiert werden; und
d) Verteilen von aktiven Teilchen (16) im Fasergerüst und Immobilisieren derselben durch thermisches Bonden durch Einwirkung von Wärme an wenigstens die thermoplastischen Fasern (18) mit dem kleineren denier-Wert.

11. Verfahren zur Herstellung einer Filterstruktur, umfassend
a) Herstellen einer Aufschlämmung, die Verbundstoff-Strukturfasern (12) von wenigstens 30 dpf (denier pro Filament), thermoplastische Verbundstoffasern (18) mit kleinerem denier-Wert als die Strukturfasern sowie aktive Teilchen in einer Flüssigkeit umfaßt, wobei die Strukturfasern (12) eine erste relativ höher schmelzende Komponente und eine erste relativ niedriger schmelzende Komponente umfassen, wobei die erste relativ höher schmelzende Komponente einen um wenigstens 20 °C höheren Schmelzpunkt hat als die erste relativ niedriger schmelzende Komponente, wobei die thermoplastischen Verbundstoffasern (18) eine zweite relativ höher schmelzende Komponente und eine zweite relativ niedriger schmelzende Komponente umfassen und eine Feinheit von weniger als 30 dpf haben;
b) Bringen der Aufschlämmung in eine Form und Entfernen der Flüssigkeit; und
c) Zuführen von Wärme, so daß die gesamte Struktur gebondet wird, einschließlich des Bondens der Fasern (18) mit dem kleineren denier-Wert an die Strukturfasern und der aktiven Teilchen (16) an wenigstens die Fasern (18) mit dem kleineren denier-Wert.

## Revendications

1. Structure de filtre particulaire ayant un degré élevé de stabilité dimensionnelle et comprenant :
a) une ossature fibreuse, liée thermiquement, de fibres structurelles composites (12) d'au moins 30 dpf (deniers par filament) et comprenant un premier composant à fusion relativement supérieure et un premier composant à fusion relativement inférieure, le premier composant à fusion relativement supérieure ayant un point de fusion d'au moins 20°C de plus que le premier composant à fusion relativement inférieure, le premier composant à fusion relativement inférieure liant les fibres structurelles (12) les unes aux autres aux points d'intersection (14) des fibres structurelles (12) afin de stabiliser l'ossature fibreuse ;
b) des fibres thermoplastiques composites (18) d'un denier relativement plus petit que les fibres structurelles (12), les fibres thermoplastiques composites (18) étant dispersées dans, et liées à, l'ossature fibreuse par l'application de chaleur de manière à être immobilisées, et comprenant un deuxième composant à fusion relativement supérieure et un deuxième composant à fusion relativement inférieure, et étant inférieures à 30 dpf ; et
c) des particules actives (16) liées par l'application de chaleur au moins aux fibres thermoplastiques composites à denier plus petit (18).

2. Structure de filtre selon la revendication 1, dans laquelle les fibres structurelles (12) sont des fibres discontinues ondulées et les fibres thermoplastiques composites (18) sont des fibres discontinues, et/ou les fibres structurelles (12) sont de 30 à 10 000 dpf, et/ou les fibres thermoplastiques composites (18) sont de 1 à moins de 30 dpf.

3. Structure de filtre selon la revendication 1 ou 2, dans laquelle les fibres structurelles (12) sont des fibres à hétérofilaments âme/gaine, le premier composant à fusion supérieure étant un polyester, et le premier composant à fusion inférieure étant un Nylon qui fond à une température d'environ 175 °C à 185 °C.

4. Structure de filtre selon l'une quelconque des revendications 1 à 3, dans laquelle les fibres thermoplastiques composites (18) sont des fibres à hétérofilaments âme/gaine et/ou le deuxième composant à fusion supérieure a un point de fusion d'au moins 20°C de plus que le deuxième composant à fusion inférieure, et/ou le deuxième composant à fusion supérieure est un polyester, et le deuxième composant à fusion inférieure est un Nylon qui fond à une température d'environ 175 °C à 185 °C.

5. Structure de filtre selon l'une quelconque des revendications 1 à 4, dans laquelle les particules actives (16) sont sélectionnées dans le groupe consistant en charbon actif, silice, zéolithe, tamis moléculaire, argile, alumine, résine échangeuse d'ions, catalyseur de métal organique, oxyde métallique, biocide, fongicide et virucide.

6. Structure de filtre selon l'une quelconque des revendications 1 à 4, dans laquelle les particules actives (16) sont du charbon actif.

7. Structure de filtre selon l'une quelconque des revendications 1 à 6, dans laquelle la structure de filtre a une épaisseur d'environ 1 mm à 250 mm, et/ou les fibres structurelles (12) composent jusqu'à environ 10 % du poids total de ladite structure de filtre.

8. Procédé pour préparer une structure de filtre comprenant les phases consistant à :
a) former à sec une ossature fibreuse de fibres structurelles composites (12) d'au moins 30 dpf (deniers par filament) et comprenant un premier composant à fusion relativement supérieure et un premier composant à fusion relativement inférieure, le premier composant à fusion relativement supérieure ayant un point de fusion d'au moins 20°C de plus que le premier composant à fusion inférieure,
b) lier thermiquement les fibres structurelles (12) à leurs points d'intersection (14) par l'application de chaleur afin de stabiliser l'ossature fibreuse, le premier composant à fusion inférieure liant les fibres structurelles (12) les unes aux autres ;
c) disperser et immobiliser dans l'ossature fibreuse des fibres thermoplastiques composites (18) d'un denier relativement plus petit que les fibres structurelles (12) et comprenant un deuxième composant à fusion relativement supérieure et un deuxième composant à fusion relativement inférieure, les fibres à denier plus petit (18) étant inférieures à 30 dpf, de la chaleur étant appliquée de manière que les fibres à denier plus petit (18) soient liées à l'ossature fibreuse et immobilisées ; et
d) disperser dans l'ossature fibreuse et lier thermiquement par l'application de chaleur, au moins aux fibres à denier plus petit (18), des particules actives (16).

9. Procédé selon la revendication 8, dans lequel les fibres à denier plus petit (18) sont réparties dans l'ossature fibreuse par enrobage d'air ou hydro-enrobage, et/ou les fibres structurelles (12) sont des fibres discontinues ondulées et les fibres à denier plus petit (18) sont des fibres discontinues, et/ou les fibres structurelles (12) sont de 30 à 10 000 dpf, et/ou les fibres à denier plus petit (18) sont de 1 à moins de 30 dpf, et/ou les particules actives (16) sont du charbon actif.

10. Procédé pour préparer une structure de filtre comprenant les phases consistant à :
a) former à sec une toile de fibres thermoplastiques composites (18) de 1 à moins de 30 dpf (deniers par filament) et comprenant un premier composant à fusion relativement supérieure et un premier composant à fusion relativement inférieure,
b) intégrer dans ladite toile des fibres structurelles composites (12) d'au moins 30 dpf et comprenant un deuxième composant à fusion relativement supérieure et un deuxième composant à fusion relativement inférieure, le deuxième composant à fusion relativement supérieure ayant un point de fusion d'au moins 20°C de plus que le deuxième composant à fusion inférieure, afin de former une ossature fibreuse des fibres structurelles composites (12),
c) appliquer de la chaleur pour lier thermiquement les fibres structurelles (12) à leurs points d'intersection (14) afin de stabiliser l'ossature fibreuse et lier les fibres thermoplastiques à denier plus petit (18) aux fibres structurelles (12), de manière à immobiliser les fibres thermoplastiques à denier plus petit (18) au sein de l'ossature fibreuse, et
d) disperser dans l'ossature fibreuse et immobiliser par liaison thermique par l'application de chaleur, au moins aux fibres thermoplastiques à denier plus petit (18), des particules actives (16).

11. Procédé pour préparer une structure de filtre comprenant les phases consistant à :
a) préparer une pâte comprenant des fibres structurelles composites (12) d'au moins 30 dpf (deniers par filament), des fibres thermoplastiques composites (18) d'un denier relativement plus petit que les fibres structurelles et des particules actives dans un liquide, dans lequel les fibres structurelles (12) comprennent un premier composant à fusion relativement supérieure et un premier composant à fusion relativement inférieure, et le premier composant à fusion relativement supérieure a un point de fusion d'au moins 20°C de plus que le premier composant à fusion inférieure, et dans lequel les fibres thermoplastiques composites (18) comprennent un deuxième composant à fusion relativement supérieure et un deuxième composant à fusion relativement inférieure, et sont inférieures à 30 dpf,
b) placer la pâte dans un moule et éliminer le liquide, et
c) appliquer de la chaleur pour lier la structure tout entière comprenant la liaison des fibres à denier plus petit (18) aux fibres structurelles et des particules actives (16) au moins aux fibres à denier plus petit (18).
